(19) Europäisches Patentamt
European Patent Office
Office européen des brevets

(11) EP 1 612 187 A1

(12) EUROPEAN PATENT APPLICATION

(43) Date of publication:
04.01.2006 Bulletin 2006/01

(51) Int Cl.:
C01B 31/02 (2006.01)

(21) Application number: 05009024.0

(22) Date of filing: 25.04.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 30.06.2004 US 881600

(71) Applicant: E.I. DU PONT DE NEMOURS AND
COMPANY
Wilmington, DE 19898 (US)

(72) Inventors:
• Lumsdon, Simon Owen
Wilmington
Delaware 19808 (US)
• Scott, David M.
Wilmington
Delaware 19803 (US)

(74) Representative: Thomson, James B.
Frank B. Dehn & Co.
179 Queen Victoria Street
London EC4V 4EL (GB)

(54) **Carbon nanotube microfibers**

(57) The present invention relates to the field of nanotechnology. Specifically, it relates to the production of carbon nanotube microfibers from dispersed carbon nanotube fragments that are subsequently exposed to an electric field.

0.2mm

# Fig. 4

EP 1 612 187 A1

**Description**

Field of the Invention

The present invention relates to the field of nanotechnology. Specifically, it relates to the production of carbon nanotube microfibers from dispersed carbon nanotube fragments that are subsequently exposed to an electric field.

Technical Background of the Invention

It has been known for nearly 200 years that charged particles in a constant (DC) electric field experience electrophoretic forces that cause them to move. More recently it has been observed that colloidal particles, including carbon nanotubes, can be assembled into a variety of small-scale structures by application of electric fields created by contact electrodes. However, the electrophoretic technique is limited to colloidal systems where a strong surface charge is present on the particles and where the applied voltage is low (below the threshold for hydrolysis). These limitations can be overcome by the use of alternating (AC) fields and the dielectrophoretic force. See, for instance, T. B. Jones, *Electromechanics of Particles*; Cambridge University Press, Cambridge, 1995; H. A. Pohl, *Dielectrophoresis,* Cambridge University Press, Cambridge, 1978; and R. Pethig, et al., *J. Phys. D: Appl. Phys.* **1992,** 24, 881.

The application of an AC field across a suspension of colloidal particles leads to their polarization. The sign and magnitude of the resulting induced dipoles depend on the effective polarizability of the particles, which is given by the real part of the Clausius - Mossotti function, K

$$\mathrm{Re}\left|\underline{K}\right| = \frac{\varepsilon_2 - \varepsilon_1}{\varepsilon_2 + 2\varepsilon_1} + \frac{3(\varepsilon_1\sigma_2 - \varepsilon_2\sigma_1)}{\tau_{MW}(\sigma_2 + 2\sigma_1)^2(1 + w^2\tau_{MW}^2)} \qquad [1]$$

where $\varepsilon_1$ (and $\varepsilon_2$) and $\sigma_1$ (and $\sigma_2$) are the dielectric permittivity and conductivity of the media and the particles, respectively. Metallic particles are always attracted to the regions of high field gradient. For dielectric particles the force changes from attractive to repulsive at a crossover frequency of $\omega_C = (\tau_{MW})^{-1}$, where $\tau_{MW}$ is the Maxwell-Wagner charge relaxation time $\tau_{MW} = \dfrac{\varepsilon_2 + 2\varepsilon_1}{\sigma_2 + 2\sigma_1}$. Such a frequency-dependent change of sign of the interactions is commonly observed with polymer microspheres in water and allows a high degree of control. See also T. Muller, et al., *J. Phys. D: Appl. Phys.* **1996,** *29,* 340.

In the limit of frequencies ω much larger than the crossover frequency $\omega_C$ , Equation (1) reduces to a function of the dielectric constants only

$$\lim_{\omega \to \infty} \mathrm{Re}[K] = (\varepsilon_2 - \varepsilon_1)/(\varepsilon_2 + 2\varepsilon_1) \qquad [2]$$

In the limit of frequencies much lower than $\omega_C$ , Equation (1) reduces to a function of the conductivities only:

$$\lim_{\omega \to 0} \mathrm{Re}[K] = (\sigma_2 - \sigma_1)/(\sigma_2 + 2\sigma_1) \qquad [3]$$

The dipoles of the polarized particles interact with the imposed electric fields. The resulting dielectrophoretic (DEP) force, $\vec{F}_{DEP}$ ,depends on the field gradient, $\vec{\nabla} E^2$ and the radius of the particle, *r*

$$\vec{F}_{DEP} = 2\pi\varepsilon_1 \mathrm{Re}|K(w)| \, r^3 \vec{\nabla} E_{rms}^2 \qquad [4]$$

The use of alternating voltage allows manipulation of virtually any type of polarizable particle in any type of medium and has the advantage of permitting high field strengths without causing hydrolysis or electro-osmotic currents, either of which can disrupt particle fluxes.

Krupke et al., Science **2003,** 301, 344, describe a method wherein single wall carbon nanotubes (SWCNT) are dispersed in heavy water ($D_2O$) and centrifuged at a very high acceleration (170,000 g) for 4 hours to produce a very low concentration of SWCNT in water. Then, a very high frequency (10 MHz) AC electrical potential is applied to the electrodes, which are in direct contact with the dispersion. The gap between the electrodes is generally small, on the order of 40 $\mu$m. Evidently these authors were operating in the high frequency limit, because their equation (1) is a function of dielectric constants, and it can be seen to be a combination of Equations (2) and (4) shown here.

M. S. Kumar, et al., *Chemical Physics Letters* **2004,** 383, 235 describes the formation of SWCNT's via AC field at relatively high frequency (3V, 1 MHz). The SWCNT's produced were approximately 3-5 $\mu$m long and 10-15 nm diameter, having the appearance of ropes. The fragments were dispersed via sonification for several hours.

There is a need to fabricate relatively long microfibers comprising carbon nanotubes in a rapid manner from dispersed CNT fragments. Unlike previously described processes, the present invention can be prepared in $H_2O$ instead of relatively expensive heavy water. The centrifugation is of much shorter duration (30 minutes instead of 4 hours) and lower intensity (only 6000 g). The frequency of the applied voltage is more than 3 orders of magnitude lower than that taught by Krupke et al., ranging from 100 Hz to 10 kHz. At high frequencies, parasitic capacitance creates unintended signal pathways that may lead to dielectrophoresis and subsequent growth of microfibers at deleterious locations, complicating the electrical design of the fixtures and electrode structure. Therefore, the advantage of using low frequencies is that the design and construction of the circuitry, cables, and fixtures are simplified.

An additional advantage of the present invention is that is can be used to purify mixtures of CNT fragments. Two kinds of purification are possible: separation of metallic CNTs from semiconductor CNTs, and extraction of CNT fragments (of either type) from the agglomerated and aggregated material usually produced in the CNT formation process. Due to the great difference in electrical conductivity between the semiconductor and metallic types of CNT (see Bachtold et. al, Phys. Rev. Lett. 2000, 845, 6082), it is possible to prepare the conductivity of the medium (water) so that in the low frequency limit of Equation 4 the dielectrophoretic force is positive for metallic CNTs and negative for semiconducting CNTs. Thus metallic types will move towards regions of higher field strength and semiconductor types will move towards regions ot lower field strength. This motion provides for segregation of CNT fragments according to their electronic properties. It should be possible to classify further the CNT fragments of a given type according to their specific electronic structure by balancing the dielectrophoretic forces through manipulation of frequency or conductivity of the medium.

The second kind of purification (extraction of CNT fragments) is an important advantage given the highly agglomerated and aggregated nature of the material produced by nearly all of the known primary processes used to produce CNTs. Owing to their large size (typically in the 1-50 micron range), agglomerates and aggregates of CNTs have a very small mobility in the dispersion. Therefore, CNT fragments may be physically extracted from these larger structures through the application of dielectrophoresis. The yield of individual CNT fragments may be increased through the application of comminution (milling), which breaks the larger structures into pieces, or suitable surfactants and dispersants, which free the fragments from agglomerated material.

A further advantage of the present invention is it can create sub-micron assemblies that function as electrical resistors, which can be used in a variety of electronic and sensing applications. Resistors are a basic component of electronic circuits, and the microfibers produced here can be used to construct circuits on the chip (IC) or wafer scale. Furthermore the surface of these microfibers can be modified to bind with specific proteins or biological materials, so that when such molecules are present the electrical resistance of the microfiber is changed. Therefore these CNT microfibers may be used as sensors in chemical and biomedical applications.

Summary of the Invention

The present invention relates to a process for making carbon nanotube fibers comprising the steps of:

(a) placing a dispersed carbon nanotube solution comprising dispersed CNT fragments between a pair of electrodes; and
(b) applying an effective AC voltage to the electrodes to assemble multiple carbon nanotube fragments into carbon nanotube fibers of a length greater than the average length of the dispersed CNT fragments., wherein the frequency of the effective applied voltage is 1 MHz or less.

The present invention also relates to a process for making carbon nanotube fibers comprising the steps of:

(c) placing a dispersed carbon nanotube solution comprising dispersed CNT fragments between a pair of electrodes; and
(d) applying an effective DC voltage to the electrodes to assemble multiple carbon nanotube fragments into carbon nanotube fibers of a length greater than the average length of the dispersed CNT fragments.

Brief Description of the Figures

Figure 1(a) is a photograph of an electrode configuration used to grow microwires. Figure 1(b) is a schematic illustration of the electrode configuration used to grow microwires.

Figure 2 is a graphical representation showing the typical current-voltage response of carbon nanotubes grown in a 25 μm electrode gap.

Figure 3 is a graphical representation showing the threshold voltage required for microfiber growth across a 5 μm electrode gap.

Figure 4 shows an SEM collage of a CNT produced by the invention.

Detailed Description of the Invention

The present invention relates to a dielectrophoretic assembly of carbon nanotubes into micro-scale fibers. These microfibers can be used as electrical wires of sub-micron diameter and lengths of between 100 nm and several mm.

One class of nano-structures is carbon nanotubes (CNT's), which have attracted much attention because of their dimensions and predicted structure-sensitive properties. Carbon nanotubes have a diameter on the order of a few nanometers and lengths of up to several micrometers. These elongated nanotubes consist of carbon hexagons arranged in a concentric manner with both ends of the tube capped by pentagon-containing, buckminsterfullerene-like structures. Nanotubes can behave as semiconductors or metals depending on diameter and chirality of the arrangement of graphitic rings in the walls. Additionally, dissimilar carbon nanotubes may be joined together allowing the formation of molecular wires with interesting electrical, magnetic, nonlinear optical, thermal and mechanical properties.

The unusual properties of nanotubes suggest a diverse number of applications in material science and nanotechnology, including new materials for electron field emitters in panel displays, single-molecular transistors, scanning probe microscope tips, gas and electrochemical energy storage, catalysts, protein/DNA supports, molecular filtration membranes, and energy-absorbing materials (see, for example: M. Dresselhaus, et al., *Phys. World*, January, 33, 1988; P.M.Ajayan, and T.W.Ebessen, *Rep. Prog. Phys.,* 60, 1027, 1997; R.Dagani, *C&E News,* January 11, 31, 1999).

Nano-structures having metallic or semiconductor properties which are cut to specific dimensions have utility in the construction of nano-scale electrical machines and circuits, useful in the electronics, communications computer and other industries. For example large-scale production of nanotubes with attributes of uniform length or specific size-distribution can be used in electronic applications such as field-emission transistors, artificial actuators, molecular-filtration membranes, energy-absorbing materials, molecular transistors, and other optoelectronic devices as well as in gas storage, single-electron devices, and chemical and biological sensors.

The term "nanotube" refers to a hollow article having a narrow dimension (diameter) of about 1-200 nm and a long dimension (length), where the ratio of the long dimension to the narrow dimension, i.e., the aspect ratio, is at least 5. In general, the aspect ratio is between 10 and 2000.

The term "carbon nanotube fragment" refers to carbon nanotube sections generally of a length of at least three carbon nanotube diameters.

The term "carbon nanotube fibers" refers to an assemblage of carbon nanotube fragments having a length greater than the average length of the fragments. These fibers may also be considered to be wires having electrical properties including but not limited to conductance and resistivity.

By "carbon-based nanotubes" or "carbon nanotube" or "CNT" herein is meant hollow structures composed primarily of carbon atoms. The carbon nanotube can be doped with other elements, e.g., metals.

The term "aligned" as it refers to nanotubes in a dispersant solution refers to the orientation of an individual nanotube or aggregate of nanotubes with respect to the others (i.e., aligned versus non-aligned). As used herein the term "aligned" may also refer to a 2 dimensional orientation of nano-structures (laying flat) on a substrate.

Preferred nano-rods in the present invention are nanotubes, where carbon based nanotubes (CNT's) are most preferred. Nanotubes of the invention are generally about 1-200 nm in length where the ratio of the length dimension to the narrow dimension, i.e., the aspect ratio, is at least 5. In general, the aspect ratio is between 10 and 2000. Carbon nanotubes are comprised primarily of carbon atoms, however may be doped with other elements, e.g., metals. The carbon-based nanotubes of the invention can be either multi-walled nanotubes (MWCNTs) or single-walled nanotubes (SWCNTs). A MWCNT, for example, includes several concentric nanotubes each having a different diameter. Thus, the smallest diameter tube is encapsulated by a larger diameter tube, which in turn, is encapsulated by another larger diameter nanotube. A SWCNT, on the other hand, includes only one nanotube.

In one embodiment of the present invention, the nanotubes are dispersed by sonication. By sonication is meant an application of ultrasonic power. Other non-limiting methods of dispersion include the use of surfactants and DNA association.

Example

**Materials.**

Ultrapure water was obtained from a Barnstead Easypure® reverse osmosis system. Single- and multi-walled carbon nanotubes were obtained from MER Corp., Tucson AZ. These nanotubes had a diameter of approximately 15 nm (as observed via scanning electron microscopy), but nanotubes of other diameters can also be used. The nanotubes were dispersed in water using an ultrasonic probe at a concentration of approximately 0.01 % by weight (Sonics & Materials Vibra-Cell, operating at 20 kHz for 2 minutes).

**Apparatus**

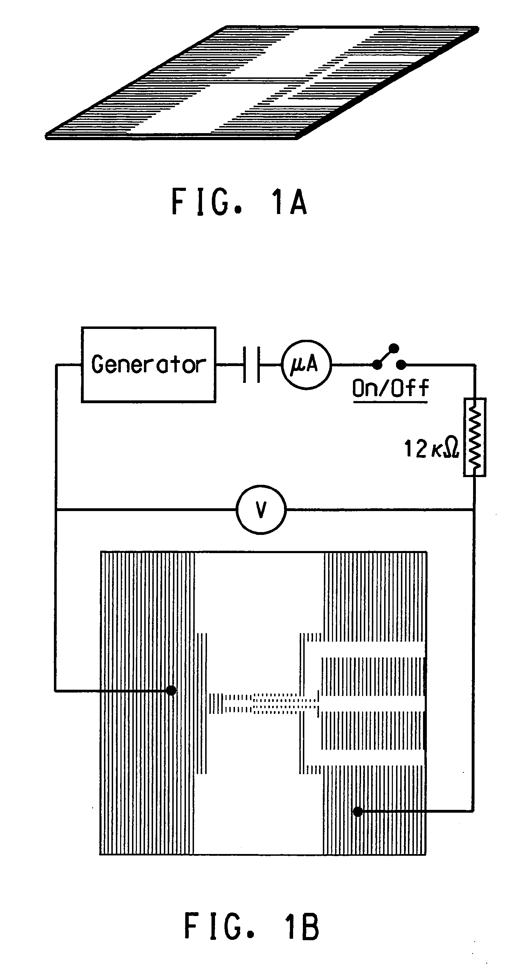

The microfibers, herein also designated as microwires, are assembled in an alternating electric field between two electrodes; the gap between these electrodes ranged between 10 $\mu$m to 3 mm. Two types of electrode assemblies were prepared. In the first type, 100 nm thick gold electrodes were deposited onto glass slides, and the gap between the electrodes was determined by the width of a Teflon® tape which acted as a mask during the deposition. The electrode gap ranges from 4 to 8 mm. The second type of electrode structures (with gap sizes ranging from 10 microns to 100 microns) were fabricated on a glass substrate via photolithography. These electrodes were formed by depositing a 100 nm thick layer of gold onto a 10 nm layer of chromium. A photomask defining the size and shape of the electrodes was used to apply an etch-resist layer, and then the excess metal was removed. A photograph and schematic of a typical electrode configuration is shown in Fig. 1.

In order to assemble a microwire, the colloidal suspension is placed on the electrode gap and covered with a glass cover slip. An alternating electric field is applied using a function generator (Wavetek Model 23) and the electrical circuit shown in Fig. 1. The resistor in Fig. 1 limits the surge of current when the wires bridge the gap, causing the wires to assemble in the gap, and the capacitor blocks any DC bias produced by the function generator. It should be noted that the use of such small gaps lowers the applied voltage necessary to grow a microwire, so there is no need for an external linear amplifier (as used in the previous work). The frequency of the applied field was varied between 100 and 10,000 Hz, and the applied voltage and current were measured using digital multimeters (Fluke Model 87).

The prior art presupposes that the electrodes must be in direct contact with the dispersion of carbon nanotubes, but in fact the dielectrophoretic force arises due to the AC electric field. Electric fields of the necessary intensity may be created without direct contact with the liquid. When a thin insulating (dielectric) material is placed between the electrode and the dispersion, the strength of the electric field is partially reduced by the presence of the dielectric, but an electric field still appears in the dispersion. Therefore it is not necessary to have direct contact with the dispersion. The advantage of this invention is that it avoids potential hydrolysis, which can occur at the electrode face.

**Experimental Methods.**

Experiments were conducted by preparing an aqueous colloid of SWCNTs or MWCNTs, subjecting it to an alternating electric field, and observing the growth of the microfibers. A number of experimental parameters were varied: particle size, concentration, composition, electrode gap, root mean square (RMS) voltage applied to the electrodes, and the frequency. Observations included the RMS current passing through the colloid during fiber growth, the threshold voltage required to initiate fiber growth, growth rate, the diameter and morphology of the assembled microfiber, and the electrical resistance of the completed microfiber.

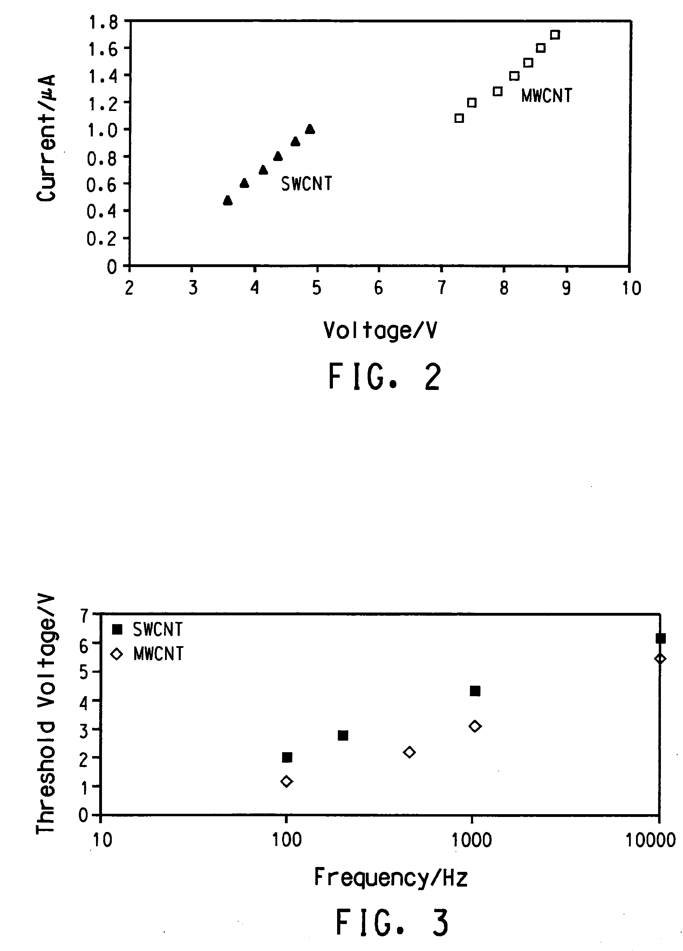

Resistance was estimated by injecting an alternating current through the wire and recording the corresponding voltage drop between the two electrodes. This data was used to construct an I-V (i.e., current versus voltage) curve for the wire; the inverse slope of the resulting line (see Figure 2) is the resistance of the wire. In Figure 2, the resistance of the wire (microfiber) is approximately 2.5 M$\Omega$, but a variety of other resistances (and volume resistivities) have been produced by this invention. This measurement is made while the microwire is still in the partially depleted colloidal suspension. The presence of the colloid undoubtedly perturbs the measurement, but since the current flowing through the circuit increases by several orders of magnitude when the wire is complete, we believe this perturbation to be small.

**Mechanism of wire assembly.**

The dielectrophoretic force on the colloidal particles drives them towards regions of maximum field intensity, which for this geometry lie along the surface of the glass slide. When the particles are dispersed, repulsive interactions between them prevent agglomeration. In the region of high concentration, however, the repulsive interactions are overcome by the dielectrophoretic force, causing the particles to agglomerate onto the wire tip.

The minimum voltage required to initiate wire growth is dependent on a number of variables. According to Equations (1) and (2), the dielectrophoretic force is a function of the frequency of the applied field, the particle radius, and the conductivity and dielectric permittivity of the particles and the surrounding medium. In Figure 3 the threshold voltage is plotted as a function of frequency of the applied field for SWCNT and MWCNT suspensions. Across a 5 μm gap the field strength is quite strong (typically 2000 to 20,000 V/cm) at a relatively low applied voltage of only 1 to 10 Volts, and the particles readily assemble into microwires as a result of the dielectric forces that squeeze the CNT fragments together. The threshold voltage increases with increasing frequency because, according to Equation (1), at a fixed electric field strength the dielectric force decreases with increased frequency. It is assumed that a minimum amount of energy is needed to fuse the CNT fragments into a single structure, so the applied voltage must be increased to meet this criterion. Since the electric field strength is inversely proportional to the width of the gap, very long wires must be grown using relatively low frequencies (under 100 kHz).

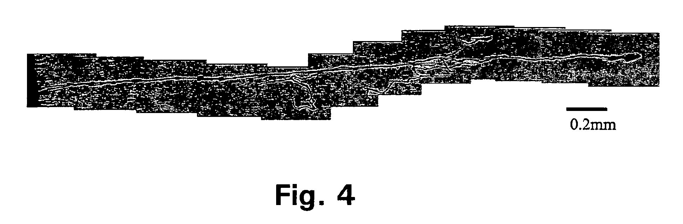

The fabrication and applications of carbon nanotubes is of great interest to both industry and academia, however, the success is dependent on the use of pure nanotube samples. Using the methods described above, a MWCNT microwire of greater than 20 mm was formed as shown in Figure 4. The benefit of producing long (up to several mm), extremely thin microfibers exhibiting high resistance values is that the sensitivity of a sensor based on such a microfiber would be increased. That is, relatively small changes in the concentration of the target molecules will still produce significant changes in absolute resistance.

**Claims**

1.  A process for making carbon nanotube fibers, comprising::

    (a) placing a dispersed carbon nanotube solution comprising dispersed CNT fragments between a pair of electrodes; and
    (b) applying an effective AC voltage to the electrodes to assemble multiple carbon nanotube fragments into carbon nanotube fibers of a length greater than the average length of the dispersed CNT fragments, wherein the frequency of the effective applied voltage is 1 MHz or less.

2.  A process for making carbon nanotube fibers comprising the steps of:

    (a) placing a dispersed carbon nanotube solution comprising dispersed CNT fragments between a pair of electrodes; and
    (b) applying an effective DC voltage to the electrodes to assemble multiple carbon nanotube fragments into carbon nanotube fibers of a length greater than the average length of the dispersed CNT fragments.

3.  The process of Claim 1, wherein the frequency of the applied effective voltage is 100 Hz or less.

4.  The process of Claim 1 or Claim 2 wherein the CNT fragments are dispersed by sonication.

5.  The process of Claim 1 or Claim 2 wherein the length of the assembled carbon nanotube fibers is at least three times that of the average length of the dispersed CNT fragments.

6.  The process of Claim 1 or Claim 2 , wherein the length of the assembled carbon nanotube fibers is at least five times that of the average length of the dispersed CNT fragments.

7.  The process of Claim 1 or Claim 2 , wherein the length of the assembled carbon nanotube fibers is at least one hundred times that of the average length of the dispersed CNT fragments.

8.  The process of Claim 1 or Claim 2, wherein the resistance of the assembled carbon nanotube fibers is at least 2.5 MΩ.

9.  The process of Claim 1 or Claim 2, wherein the carbon nanotubes are single wall carbon nanotubes (SWCNTs).

10. The process of Claim 1 or Claim 2 , wherein the carbon nanotubes are multi-wall carbon nanotubes (MWCNTs).

11. The process of Claim 1 or Claim 2 , wherein at least one of said electrodes is in direct contact with the CNT solution.

12. The process of Claim 1 or Claim 2 , wherein none of said electrodes is in direct contact with the CNT solution.

**13.** The process of Claim 1 or Claim 2, wherein the CNTs are purified.

**14.** The process of Claim 14, wherein metallic CNTs are separated from semiconductor CNTs.

**15.** The process of Claim 14, wherein CNT fragments are extracted from CNT agglomerates.

**16.** An electrical device comprising one or more CNT fibers made by the process of Claim 1 or Claim 2.

**17.** A composite material comprising one or more CNT fibers made by the process of Claim 1 or Claim 2.

**18.** A field emission display comprising one or more CNT fibers made by the process of Claim 1 or Claim 2.

**19.** An electron emitter comprising one or more CNT fibers made by the process of Claim 1 or Claim 2.

**20.** A battery comprising one or more CNT fibers made by the process of Claim 1 or Claim 2.

**21.** A fuel cell comprising one or more CNT fibers made by the process of Claim 1 or Claim 2.

**22.** An electromagnetic interference (EMI) shield comprising one or more CNT fibers made by the process of Claim 1 or Claim 2.

**23.** A chemical sensor comprising one or more CNT fibers made by the process of Claim 1 or Claim 2.

**24.** A biological sensor comprising one or more CNT fibers made by the process of Claim 1 or Claim 2.

FIG. 1A

FIG. 1B

FIG. 2

FIG. 3

0.2mm

**Fig. 4**

**European Patent Office**

**EUROPEAN SEARCH REPORT**

Application Number

EP 05 00 9024

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TANG JIE ET AL: "Assembly of 1D Nanostructures into Sub-micrometer Diameter Fibrils with Controlled and Variable Length by Dielectrophoresis" ADV MATER; ADVANCED MATERIALS AUG 15 2003, vol. 15, no. 16, 15 August 2003 (2003-08-15), pages 1352-1355, XP002352348 * the whole document * | 1,3,5-7, 9-11,16, 19 | C01B31/02 |
| X | EP 1 362 938 A (KABUSHIKI KAISHA TOYOTA JIDOSHOKKI) 19 November 2003 (2003-11-19) * claims 1-5 * * paragraph [0005] * * paragraphs [0014], [0015] * | 1,3,13, 15 | |
| X | GOMMANS H H ET AL: "FIBERS OF ALIGNED SINGLE-WALLED CARBON NANOTUBES: POLARIZED RAMAN SPECTROSCOPY" JOURNAL OF APPLIED PHYSICS, AMERICAN INSTITUTE OF PHYSICS. NEW YORK, US, vol. 88, no. 5, 1 September 2000 (2000-09-01), pages 2509-2514, XP001059578 ISSN: 0021-8979 * page 2509 - page 2510 * | 2,4-7,9, 11 | |
| | | | **TECHNICAL FIELDS SEARCHED (Int.Cl.7)** |
| | | | C01B |
| A | DATABASE WPI Section Ch, Week 200023 Derwent Publications Ltd., London, GB; Class D15, AN 2000-266361 XP002352464 & JP 2000 072422 A (DAIKEN KAGAKU KOGYO KK) 7 March 2000 (2000-03-07) * abstract * | 1,2,13 | |

-/--

The present search report has been drawn up for all claims

| Place of search | Date of completion of the search | Examiner |
|---|---|---|
| The Hague | 3 November 2005 | Rigondaud, B |

EPO FORM 1503 03.82 (P04C01)

| | European Patent Office | EUROPEAN SEARCH REPORT | Application Number EP 05 00 9024 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | KRUPKE R ET AL: "Separation of metallic from semiconducting single-walled carbon nanotubes" SCIENCE, AMERICAN ASSOCIATION FOR THE ADVANCEMENT OF SCIENCE,, US, vol. 301, no. 5631, 18 July 2003 (2003-07-18), pages 344-347, XP002339479 ISSN: 0036-8075 ----- | 1,13,14 | |
| A | YAMAMOTO K ET AL: "ORIENTATION AND PURIFICATION OF CARBON NANOTUBES USING AC ELECTROPHORESIS" JOURNAL OF PHYSICS D. APPLIED PHYSICS, IOP PUBLISHING, BRISTOL, GB, vol. 31, no. 8, 21 April 1998 (1998-04-21), pages L34-L36, XP000782990 ISSN: 0022-3727 * the whole document * ----- | 1,13,15 | |
| A | SENTHIL KUMAR M ET AL: "DC electric field assisted alignment of carbon nanotubes on metal electrodes" SOLID-STATE ELECTRON.; SOLID-STATE ELECTRONICS NOVEMBER 2003, vol. 47, no. 11, November 2003 (2003-11), pages 2075-2080, XP004444391 * the whole document * ----- | 2 | TECHNICAL FIELDS SEARCHED (Int.Cl.7) |

-/--

The present search report has been drawn up for all claims

| Place of search | Date of completion of the search | Examiner |
|---|---|---|
| The Hague | 3 November 2005 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 00 9024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEN X Q ET AL: "Aligning single-wall carbon nanotubes with an alternating-current electric field" APPLIED PHYSICS LETTERS, AIP, AMERICAN INSTITUTE OF PHYSICS, MELVILLE, NY, US, vol. 78, no. 23, 4 June 2001 (2001-06-04), pages 3714-3716, XP012028239 ISSN: 0003-6951 * the whole document * | 1 | |
| A | WO 01/63028 A (CENTRE NATIONAL DE LA RECHERCHE SCIENTIFIQUE ; POULIN, PHILIPPE; VIGOL) 30 August 2001 (2001-08-30) * claims 1,3,14,21-27 * | 1,2, 16-24 | |

TECHNICAL FIELDS
SEARCHED      (Int.Cl.7)

The present search report has been drawn up for all claims

| Place of search | Date of completion of the search | Examiner |
|---|---|---|
| The Hague | 3 November 2005 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 05 00 9024

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2005

| Patent document cited in search report | | Publication date | Patent family member(s) | | Publication date |
|---|---|---|---|---|---|
| EP 1362938 | A | 19-11-2003 | JP | 2003335507 A | 25-11-2003 |
| | | | US | 2003234174 A1 | 25-12-2003 |
| JP 2000072422 | A | 07-03-2000 | JP | 3518586 B2 | 12-04-2004 |
| WO 0163028 | A | 30-08-2001 | AU | 3749101 A | 03-09-2001 |
| | | | BR | 0108656 A | 29-04-2003 |
| | | | CA | 2397564 A1 | 30-08-2001 |
| | | | CN | 1418268 A | 14-05-2003 |
| | | | EP | 1268894 A1 | 02-01-2003 |
| | | | FR | 2805179 A1 | 24-08-2001 |
| | | | HU | 0204530 A2 | 28-04-2003 |
| | | | JP | 2003524084 T | 12-08-2003 |
| | | | NO | 20023996 A | 08-10-2002 |
| | | | US | 2003102585 A1 | 05-06-2003 |

EPO FORM P0459

For more details about this annex : see Official Journal of the European Patent Office, No. 12/82